# EUROPEAN PATENT SPECIFICATION

(11) **EP 0 915 618 B1**
(45) Date of publication and mention of the grant of the patent: **22.09.2004**
(21) Application number: 98305561.7
(22) Date of filing: 13.07.1998
(51) Int. Cl.: H04N 5/213

(54) **Impulse noise reduction apparatus and method**
Verfahren und Gerät zur Rauschimpulsverringerung
Méthode et appareil de réduction du bruit impulsionnel

(30) Priority: 10.11.1997 KR 9759070
(43) Date of publication of application: 12.05.1999
(73) Proprietor: Samsung Electronics Co., Ltd., Suwon-city, Kyungki-do (KR)
(72) Inventor: Park, Se-woong, Mapo-gu, Seoul (KR)
(74) Representative: Chugg, David John

(56) References cited:
- PATENT ABSTRACTS OF JAPAN vol. 018, no. 010 (E-1487), 10 January 1994 (1994-01-10) & JP 05 251998 A (HITACHI MICOM SYST:KK), 28 September 1993 (1993-09-28)

## Description

The present invention relates to an apparatus for reducing impulse noise, and more particularly, to an apparatus for reducing impulse noise using a median filter, and a method thereof.

In general, an image signal includes impulse noise, the amplitude of which changes irregularly according to external or internal conditions. Thus, an image reproducing apparatus must remove the impulse noise to obtain an image of high quality.

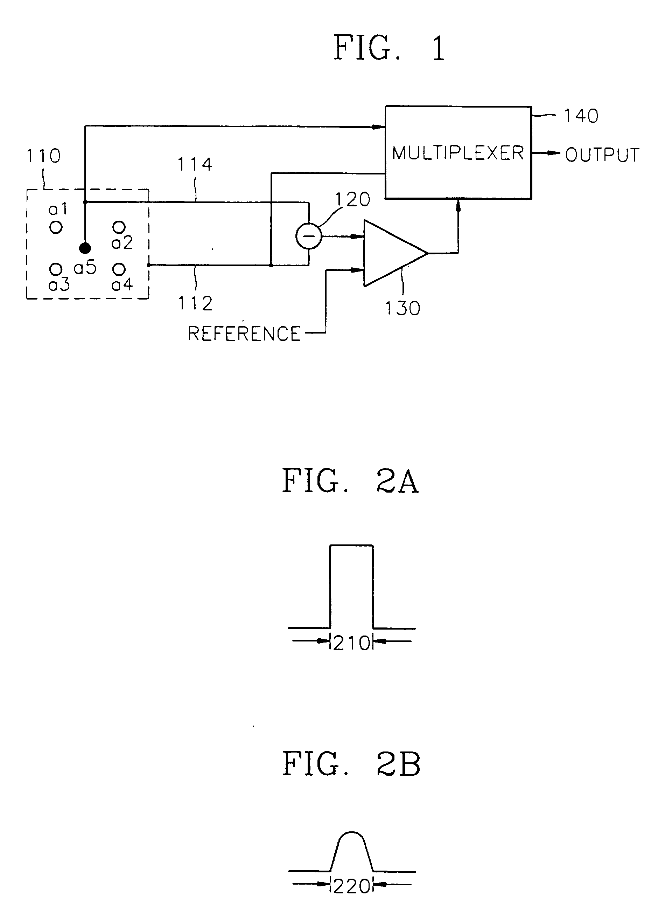

Figure 1 is a block diagram showing a typical impulse noise reduction apparatus.

An image signal consists of pixels. The mean of the image signal is obtained by determining a window of n pixels, e.g., five pixels a1, a2, a3, a4 and a5 in Figure 1. Here, a5 is a mid_value. A subtractor 120 subtracts the mid_value 114 from the mean 112 and transmits the value to a comparator 130. The comparator 130 compares the value obtained from the subtractor 120 with a reference value. If the value is higher than the reference value, a first level, e.g., logic high, which indicates noise, is output, and if not, a second level, e.g, logic low, which indicates normal pixel data, is output. A multiplexer 140 selects either the mid_pixel 114 or the mean 112 according to the level applied by the comparator 130, and outputs the selected value. When the first level is applied, the mean 112 is selected and output.

However, the apparatus of Figure 1 interprets high-frequency components 210 of the image signal as impulse noise, and thus selects the mean of the pixels corresponding thereto as shown in Figure 2A, outputting an image signal having a deteriorated high-frequency component 220 as shown in Figure 2B. Accordingly, the image signal obtained by the apparatus of Figure 1 has deteriorated frequency characteristics, and therefore lower resolution.

JP-A-5251998 discloses a method and apparatus for reducing impulse noise of an image signal as set out in the pre-characterising portion of claims 1 and 2 hereto. The method and apparatus of JP-A-5251998 selects a pixel of a median value from a plurality of pixels, comparing said pixel with a mid_pixel to generate a coefficient and cross-fading said pixel and mid_pixel according to said coefficient.

It is an aim of preferred embodiments of the present invention to provide a method of selecting a pixel of median_value to reduce noise impulse without removing high-frequency components.

It is another aim of preferred embodiments of the present invention to provide an apparatus for selecting a pixel of median_value to reduce noise impulse without removing high-frequency components.

According to a first aspect of the invention, there is provided a method of reducing impulse noise of an input image signal including luminance and colour components, comprising the steps of: selecting through median filtering a pixel of median_value from a plurality of pixels of said input image signal; cross-fading said pixel of median_value with a mid_pixel, said mid_pixel being the middle pixel among the plurality of pixels; characterised by comparing a reference range, determined by adding or subtracting an offset value to or from the selected median_value, with the value of the mid_pixel to determine whether the input image signal has impulse noise and generate a noise coefficient depending on the presence of said impulse noise; calculating a correlation value between the luminance component of the mid_pixel and the colour component thereof depending on the noise coefficient; and said cross-fading of the pixel of median_value and the mid_pixel depending on the correlation value.

According to a second aspect of the invention, there is provided an apparatus for reducing impulse noise of an input image signal including luminance and colour components, comprising: a median filter for selecting a pixel of median_value from a plurality of pixels of said input image signal; a cross-fading unit for cross-fading said pixel of median_value with a mid_pixel, said mid_pixel being the middle pixel among the plurality of pixels; characterised by a comparator for comparing a reference range, determined by adding or subtracting an offset value to or from the selected median_value, with the value of the mid_pixel to determine whether impulse noise exists in the input image signal and generate a noise coefficient depending on the presence of said impulse noise; a correlation calculator for calculating a correlation value between the luminance component of the mid_pixel and the colour component thereof depending on the noise coefficient generated by the comparator; and said cross-fading unit for cross-fading the pixel of median_value and the mid_pixel depending on the correlation value calculated by the correlation calculator.

Preferably, the median filter is a comparator.

If the mid_pixel exists between (the median_value + the offset) and (the median_value - the offset), then the comparator preferably determines the mid_pixel to be normal pixel data, and otherwise, the comparator determines the mid_pixel to be impulse noise.

If the mid_pixel is more than (the median_value + the offset), the comparator preferably outputs a noise coefficient equal to {the mid_pixel -(the median_value + the offset)}; if the mid_pixel is less than (the median_value - the offset), the comparator preferably outputs a noise coefficient of {(the median_value - the offset) - the mid_pixel}; and if the mid_pixel is between (the median_value + the offset) and (the median_value - the offset), the comparator preferably outputs a noise coefficient of 0.

The correlation calculated by the correlation calculator is preferably a higher one of the values obtained by multiplying a noise coefficient of a luminance component **Y** by that of a color component **R-Y** and by that of a color component **B-Y**.

A data output of the cross-fading unit is preferably equal to the mid_pixel (1 - the correlation value) + the correlation value*the median_value.

For a better understanding of the invention, and to show how embodiments of the same may be carried into effect, reference will now be made, by way of example, to the accompanying diagrammatic drawings, in which:
Figure 1 is a block diagram showing a typical impulse noise reduction apparatus;
Figure 2A is a waveform of an image signal having a high-frequency component;
Figure 2B is a waveform of the image signal after impulse noise has been reduced by the apparatus of Figure 1;
Figure 3 is a block diagram showing an impulse noise reduction apparatus according to an embodiment of the present invention;
Figure 4 shows windowing image data arranged in the median filter 340 of Figure 3; and
Figure 5 shows signals compared by the comparator 370 of Figure 3.

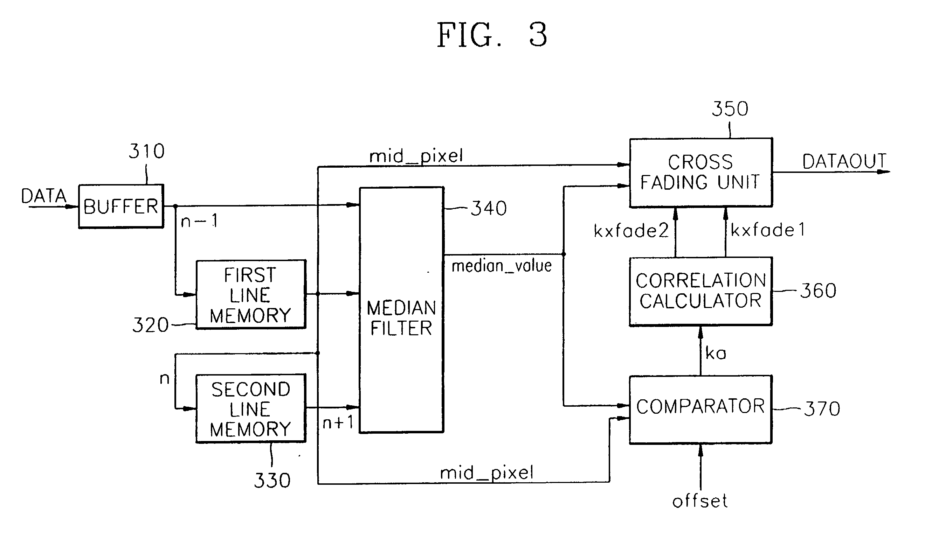

Referring to Figure 3, the impulse noise reduction apparatus includes a buffer 310 for arranging image data, a first line memory 320 for delaying the image data output by the buffer 310, a second line memory 330 for delaying the image data delayed by the first line memory 320, a median filter 340 for receiving the image data from the buffer 310 and the first and second line memories 320 and 330 to select a pixel of a median_value, a comparator 370 for comparing the mid_pixel with a value obtained by adding or subtracting the offset to or from the median_value, to generate a noise coefficient 'ka', a correlation calculator 360 for generating a first correlation value 'kxfade1' and a second correlation value 'kxfade 2' according to the noise coefficient, and a cross fading unit 350 for generating image data in which the mid_pixel and a pixel of the median_value are cross-faded according to the first and second correlation values kxfade1 and kxfade2.

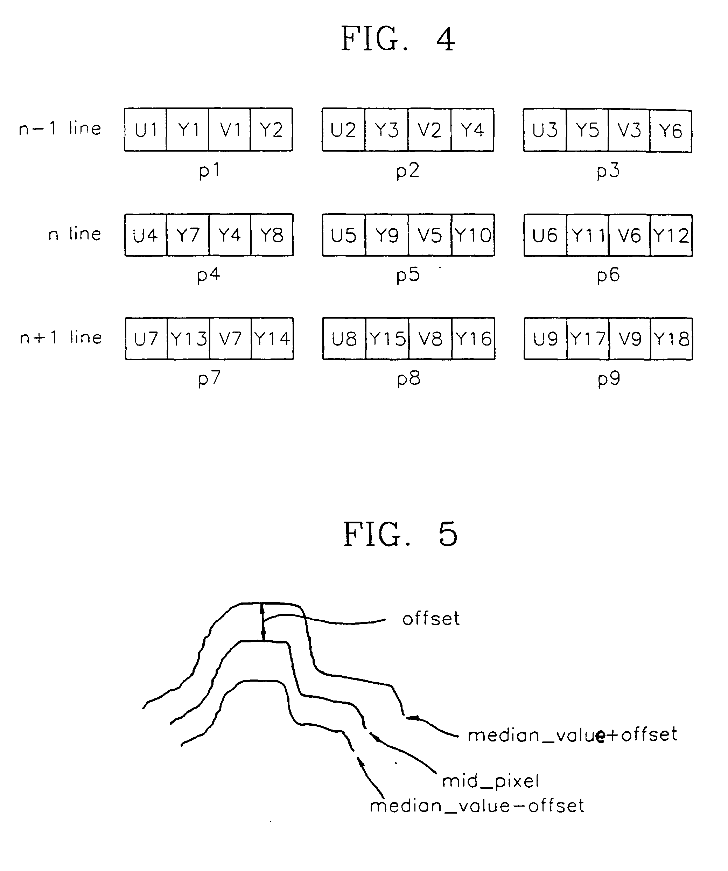

In Figure 4, 'U' indicates an R-Y chrominance component, 'V' indicates, a B-Y chrominance component, and 'Y' indicates luminance.

The operation and effects of embodiments of the present invention will be described with reference to Figures 3 through 5.

The image data includes pixels each of which is composed of a luminance component 'Y' and a color component 'C'. As shown in Figure 4, the buffer 310 arranges the input image data. The median filter 340 is comprised of a D-flipflop (not shown), a multiplexer (not shown) and a comparator (not shown) and selects a pixel of the median_value from the image data. That is, the median filter 340 receives an (n-1)th line pixel, an nth line pixel and an (n+1)th line pixel, and windows five pixels, e.g., U1, U3, U5, U7 and U9 of the three lines n, n-1 and n+1 as shown in Figure 4. Here, the (n-1)th line pixels p1, p2 and p3 are currently input image data, and the nth line pixels p4, p5 and p6 and the (n+1)th line pixels p7, p8 and p9 are image data which have passed through the first and second line memories 320 and 330, respectively. Here, a pixel output from the first line memory 320 is a mid_pixel. In Figure 4, the mid_pixels are U5, Y9, V5 and Y10.

In the median filter 340, five pixels are windowed in order to remove the impulse noise of the mid_pixels. That is, the windowed mid_pixels U5, Y9, V5 and Y10 are defined as follows.

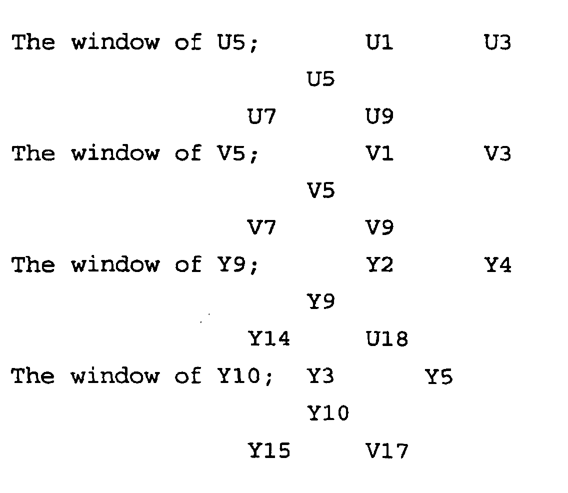

In the median filter 340, the median_value instead of the mean is selected from the window of U5. For instance, if U1 = 0, U3 = 100, U5 = 100, U7 = 150 and U8 = 200, the median_value is U5. Thus, the high-frequency component is not removed from the median filter 340. Here, it is determined according to the offset in the comparator 370 whether the pixel of median_value and the mid-sample have noise. The comparator 370 compares the mid_pixel with a reference range predetermined by the median_value and the offset, to determine noise. The comparator 370 outputs the noise coefficient 'ka' which indicates normal pixel data if the mid_pixel exists within a reference range corresponding to (the median_value ± the offset) and indicates noise if not, to the correlation calculator 360. That is, if the mid_pixel is more than (the median_value + the offset), the output noise coefficient **ka** is {the mid_pixel - (the median_value + the offset)}; if the mid_pixel is less than (the median_value - the offset), the output noise coefficient **ka** is {(the median_value - the offset) - the mid_pixel}; and if the mid_pixel exists between (the median_value + the offset) and (the median_value - the offset), the output noise coefficient **ka** is 0. Here, a noise coefficient **ka** of zero indicates normal data, and a higher noise coefficient **ka** indicates higher, impulse noise.

The correlation calculator 360 receives the noise coefficient 'ka' and calculates the correlation between Y and C(U, V) to output the first and second correlation values kxfade1 and kxfade2 to the cross-fading unit 350. That is, the higher one of the values obtained by multiplying a noise coefficient of Y9 by that of U and by that of V is the first correlation value kxfade1, and the higher one of the values obtained by multiplying a noise coefficient of Y10 by that of U and that of V is the second correlation value kxfade2. For instance, when the mid_pixel is U5, Y9, V5 or Y10, the noise coefficients **ka** of U5, Y9, V5 and Y10 are k2, k, k3 and k1, respectively, and the first and second correlation values kxfade1 and kxfade2 of Y and C are as follows (Note: * used herein denotes the multiplication operation). If kxfade1 = (k*k2)/256 and (k*k3)/256 > kxfade1, then kxfade1 = (k*k3)/256, and otherwise, kxfade1 = (k*k2)/256. Also, if (k1*k2)/256 and (k1*k3)/256 > kxfade2, then kxfade2 = (k1*k3)/256, and otherwise, kxfade2 = (k1*k2)/256. That is, the first correlation value kxfade1 is obtained by calculating noise coefficients of Y9, V5 and U5, and the second correlation value kxfade2 is obtained by calculating noise coefficients of Y10, V5 and U5. The cross-fading unit 350 cross-fades the received mid_pixel and the pixel of the median_value using the first and second correlation values kxfade1 and kxfade2 to output the cross-faded pixels. Thus, in the cross-fading unit 350, the output given by data U5 is equal to (the mid_pixel (1-kxfade1) + the kxfade1*the median_value), the output given by data Y9 is equal to (the mid_pixel (1-kxfade1) + kxfade1*the median_value), the output given by data V5 is equal to (the mid_pixel (1-kxfade) + kxfade1*the median_value), and the output given by data Y10 is equal to (the mid_pixel (1-kxfade2) + the kxfade2*the median_value). For instance, if no impulse noise exists, the noise coefficient of the luminance and color is zero and thus kxfade1 is zero, so that the data U5 is output as the mid_pixel, and if the impulse noise exists, kxfade1 is an integer, to thereby output data in which the mid_pixel and the pixel of the median_value are cross-faded.

According to the above, the impulse noise of the image signal is removed but the high-frequency component still remains, giving high resolution and no deterioration of image quality.

## Claims

1. A method of reducing impulse noise of an input image signal including luminance and colour components, comprising the steps of:
selecting through median filtering a pixel of median_value from a plurality of pixels of said input image signal;
cross-fading said pixel of median_value with a mid_pixel, said mid_pixel being the middle pixel among the plurality of pixels;
**characterised by** comparing a reference range, determined by adding or subtracting an offset value to or from the selected median_value, with the value of the mid_pixel to determine whether the input image signal has impulse noise and generate a noise coefficient depending on the presence of said impulse noise;
calculating a correlation value between the luminance component of the mid_pixel and the colour component thereof depending on the noise coefficient; and
said cross-fading of the pixel of median_value and the mid_pixel depending on the correlation value.

2. An apparatus for reducing impulse noise of an input image signal including luminance and colour components, comprising:
a median filter (340) for selecting a pixel of median_value from a plurality of pixels of said input image signal;
a cross-fading unit (350) for cross-fading said pixel of median_value with a mid_pixel, said mid_pixel being the middle pixel among the plurality of pixels;
**characterised by** a comparator (370) for comparing a reference range, determined by adding or subtracting an offset value to or from the selected median_value, with the value of the mid_pixel, to determine whether impulse noise exists in the input image signal and generate a noise coefficient depending on the presence of said impulse noise;
a correlation calculator (360) for calculating a correlation value between the luminance component of the mid_pixel and the colour component thereof depending on the noise coefficient generated by the comparator (370); and
said cross-fading unit (350) for cross-fading the pixel of median_value and the mid_pixel depending on the correlation value calculated by the correlation calculator (360).

3. The apparatus of claim 2, wherein the median filter (340) is a comparator.

4. The apparatus of claim 2 or 3, wherein if the mid_pixel exists between (the median_value + the offset) and (the median_value - the offset), the comparator determines the mid_pixel to be normal pixel data, and otherwise, the comparator determines the mid_pixel to be impulse noise.

5. The apparatus of claim 2, 3 or 4, wherein if the mid_pixel is more than (the median_value + the offset), the comparator outputs a noise coefficient equal to {the mid_pixel -(the median_value + the offset)}; if the mid_pixel is less than (the median_value - the offset), the comparator outputs a noise coefficient of {(the median_value - the offset) - the mid_pixel}; and if the mid_pixel is between (the median_value + the offset) and (the median_value - the offset), the comparator outputs a noise coefficient of 0.

6. The apparatus of claim 2, 3, 4 or 5, wherein the correlation calculated by the correlation calculator is a higher one of the values obtained by multiplying a noise coefficient of a luminance component **Y** by that of a color component **R-Y** and by that of a color component **B-Y**.

7. The apparatus of claim 2, 3, 4, 5 or 6, wherein a data output of the cross-fading unit is equal to the mid_pixel (1 - the correlation value) + the correlation value*the median_value.

## Patentansprüche

1. Verfahren zum Verringern von Impulsrauschen eines Eingangs-Bildsignals, das eine Helligkeits- und eine Farbkomponente enthält, wobei es die folgenden Schntte umfasst;
Auswählen eines Pixels mit Median-Wert aus einer Vielzahl von Pixeln des Eingangs-Bildsignals durch Medianfiltern;
Überblenden des Pixels mit Median-Wert mit einem Mittel-Pixel, wobei das Mittel-Pixel das mittlere Pixel aus der Vielzahl von Pixeln ist;
**gekennzeichnet durch**
Vergleichen eines Bezugsbereiches, der bestimmt wird, indem ein Offset-Wert zu dem ausgewählten Median-Wert addiert oder von ihm subtrahiert wird, mit dem Wert des Mittel-Pixels, um zu bestimmen, ob das Eingangs-Bildsignal Impulsrauschen aufweist, und in Abhängigkeit vom Vorhandensein des Impulsrauschens einen Rausch-Koeffizienten zu erzeugen;
Berechnen eines Korrelations-Wertes zwischen der Helligkeits-Komponente des Mittel-Pixels und der Farb-Komponente desselben in Abhängigkeit von dem Rausch-Koeffizienten; und
wobei das Überblenden des Pixels mit Median-Wert und des Mittel-Pixels von dem Korrelations-Wert abhängt.

2. Vorrichtung zum Verringern von Impuls-Rauschen eines Eingangs-Bildsignals, das eine Helligkeits- und eine Farb-Komponente enthält, die umfasst:
ein Medianfilter (340) zum Auswählen eines Pixels mit Median-Wert aus einer Vielzahl von Pixeln des Eingangs-Bildsignals;
eine Überblendeinheit (350) zum Überblenden des Pixels mit Median-Wert mit einem Mittel-Pixel, wobei das Mittel-Pixel das mittlere Pixel aus der Vielzahl von Pixeln ist;
**gekennzeichnet durch**
einen Komparator (370) zum Vergleichen eines Bezugsbereiches, der bestimmt wird, indem ein Offset-Wert zu dem ausgewählten Median-Wert addiert oder von ihm subtrahiert wird, mit dem Wert des Mittel-Pixels, um zu bestimmen, ob Impulsrauschen in dem Eingangs-Bildsignal vorhanden ist, und in Abhängigkeit vom Vorhandensein des Impulsrauschens einen Rausch-Koeffizienten zu erzeugen;
ein Korrelations-Berechnungselement (360) zum Berechnen eines Korrelations-Wertes zwischen der Helligkeits-Komponente des Mittel-Pixels und der Farb-Komponente desselben in Abhängigkeit von dem **durch** den Komparator (370) erzeugten Rausch-Koeffizienten; und
wobei die Überbiendeinheit (350) zum Überienden des Pixels des Median-Wertes und des Mittel-Pixels von dem **durch** das Korrelations-Berechnungselement (360) berechneten Korrelations-Wert abhängt.

3. Vorrichtung nach Anspruch 2, wobei das Medianfilter (340) ein Komparator ist

4. Vorrichtung nach Anspruch 2 oder 3, wobei, wenn das Mittel-Pixel zwischen (Median-Wert + Offset) und (Median-Wert - Offset) vorhanden ist, der Komparator bestimmt, dass es sich bei dem Mittel-Pixel um normale Pixel-Daten handelt, und ansonsten der Komparator bestimmt, dass es sich bei dem Mittel-Pixel um Impulsrauschen handelt.

5. Vorrichtung nach Anspruch 2, 3 oder 4, wobei, wenn das Mittel-Pixel mehr als (Median-Wert + Offset) ist, der Komparator einen Rausch-Koeffizienten ausgibt, der {Mittel-Pixel - (Median-Wert + Offset)} entspricht, wenn das Mittel-Pixel geringer ist als (Median-Wert - Offset), der Komparator einen Rausch-Koeffizienten von {(Median-Wert - Offset) - Mittel-Pixel} ausgibt, und, wenn das Mittel-Pixel zwischen (Median-Wert + Offset) und (Median-Wert - Offset) liegt, der Komparator einen Rausch-Koeffizienten von 0 ausgibt.

6. Vorrichtung nach Anspruch 2, 3, 4 oder 5, wobei die durch das Korrelations-Berechnungselement berechnete Korrelation höher ist als einer der Werte, der ermittelt wird, indem ein Rausch-Koeffizient einer Helligkeits-Komponente Y mit dem einer Farb-Komponente R-Y und mit dem einer Farb-Komponente B-Y multipliziert wird.

7. Vorrichtung nach Anspruch 2, 3, 4, 5 oder 6, wobei ein Daten-Ausgang der Überblendeinheit dem Mittel-Pixel (1 - Korrelations-Wert) + Korrlations-Wert • Median-Wert entspricht.

## Revendications

1. Procédé de réduction de bruit impulsionnel d'un signal d'image d'entrée incluant des composantes de luminance et de couleur, comportant les étapes consistant à :
sélectionner via un filtrage médian un pixel de valeur_médiane parmi une pluralité de pixels dudit signal d'image d'entrée,
effectuer un fondu enchaîné dudit pixel de valeur_médiane avec un pixel_central, ledit pixel_central étant le pixel central parmi la pluralité de pixels,
**caractérisé en ce qu'**il compare une plage de référence, déterminée en ajoutant une valeur de décalage à la valeur_médiane sélectionnée ou en soustrayant une valeur de décalage de celle-ci, à la valeur du pixel_central pour déterminer si le signal d'image d'entrée a du bruit impulsionnel et générer un coefficient de bruit en fonction de la présence dudit bruit impulsionnel,
calculer une valeur de corrélation entre la composante de luminance du pixel_central et la composante de couleur de celui-ci en fonction du coefficient de bruit, et
ledit fondu enchaîné dudit pixel de valeur_médiane et du pixel_central étant fonction de la valeur de corrélation.

2. Dispositif pour réduire du bruit impulsionnel d'un signal d'image d'entrée incluant des composantes de luminance et de couleur, comportant :
un filtre médian (340) pour sélectionner un pixel de valeur_médiane parmi une pluralité de pixels dudit signal d'image d'entrée,
une unité de fondu enchaîné (350) pour effectuer un fondu enchaîné dudit pixel de valeur_médiane avec un pixel_central, ledit pixel_central étant le pixel central parmi la pluralité de pixels,
**caractérisé par** un comparateur (370) pour comparer une plage de référence, déterminée en ajoutant une valeur de décalage à la valeur_médiane sélectionnée ou en soustrayant une valeur de décalage de celle-ci, à la valeur du pixel_central pour déterminer si du bruit impulsionnel existe dans le signal d'image d'entrée et générer un coefficient de bruit en fonction de la présence dudit signal impulsionnel,
un calculateur de corrélation (360) pour calculer une valeur de corrélation entre la composante de luminance du pixel_central et la composante de couleur de celui-ci en fonction du coefficient de bruit généré par le comparateur (370), et
ladite unité de fondu enchaîné (360) pour effectuer un fondu enchaîné du pixel de valeur_médiane et du pixel_central en fonction de la valeur de corrélation calculée par le calculateur de corrélation (360).

3. Dispositif selon la revendication 2, dans lequel le filtre médian (340) est un comparateur.

4. Dispositif selon la revendication 2 ou 3, dans lequel si le pixel_central existe entre (la valeur médiane + le décalage) et (la valeur_médiane - le décalage), le comparateur détermine le pixel_central comme étant des données de pixel normales et, sinon, le comparateur détermine le pixel_central comme étant du bruit impulsionnel.

5. Dispositif selon la revendication 2, 3 ou 4, dans lequel si le pixel_central est supérieur à (la valeur_médiane + le décalage), le comparateur délivre en sortie un coefficient de bruit égal au { pixel_central - (la valeur_médiane + le décalage)}, si le pixel_central est inférieur à (la valeur_médiane - le décalage), le comparateur délivre en sortie un coefficient de bruit de {la valeur_médiane - le décalage) - le pixel_central}, et si le pixel_central est compris entre (la valeur_médiane + le décalage) et (la valeur_médiane - le décalage), le comparateur délivre en sortie un coefficient de bruit égal à 0.

6. Dispositif selon la revendication 2, 3, 4 ou 5, dans lequel la corrélation calculée par le calculateur de corrélation est une valeur supérieure aux valeurs obtenues en multipliant un coefficient de bruit d'une composante de luminance Y par celui d'une composante de couleur R-Y et par celui d'une composante de couleur B-Y.

7. Dispositif selon la revendication 2, 3, 4, 5 ou 6, dans lequel une sortie de données de l'unité de fondu enchaîné est égale au pixel central (1 - 1a valeur de corrélation) + la valeur de corrélation × la valeur_médiane.
